**Europäisches Patentamt**

(19) **European Patent Office**

**Office européen des brevets**

(11) Numéro de publication: **0 112 249**
**B1**

(12) # FASCICULE DE BREVET EUROPEEN

(45) Date de publication du fascicule du brevet:
**20.11.86**

(51) Int. Cl.⁴: **B 62 D 5/09**

(21) Numéro de dépôt: **83402413.5**

(22) Date de dépôt: **13.12.83**

(54) Dispositif d'assistance de direction pour véhicules automobiles.

(30) Priorité: **15.12.82 FR 8221049**

(43) Date de publication de la demande:
**27.06.84 Bulletin 84/26**

(45) Mention de la délivrance du brevet:
**20.11.86 Bulletin 86/47**

(84) Etats contractants désignés:
**DE GB IT SE**

(56) Documents cités:
**FR - A - 1 287 610**
**FR - A - 2 193 938**
**FR - A - 2 402 568**
**GB - A - 1 286 843**
**GB - A - 2 044 701**

(73) Titulaire: **ACIERS ET OUTILLAGE PEUGEOT Société dite:, F-25400 Audincourt (Doubs) (FR)**

(72) Inventeur: **Fasoli, Claude, 9 Rue de l'Ecureuil, F-25230 Seloncourt (FR)**

(74) Mandataire: **Bressand, Georges et al, c/o CABINET LAVOIX 2 Place d'Estienne d'Orves, F-75441 Paris Cedex 09 (FR)**

ACTORUM AG

## Description

La présente invention se rapporte à un dispositif d'assistance de direction pour véhicules automobiles, notamment de direction à crémaillère et se rapporte plus particulièrement à un dispositif hydraulique d'assistance de direction.

Dans le GB-A-1 286843, on décrit un tel dispositif d'assistance de direction pour une direction qui comprend un boîtier dans lequel sont montés un pignon de direction lié à la colonne de direction et une crémaillère entraînée par le pignon, un distributeur hydraulique d'actionnement d'un vérin d'entraînement d'un organe lié aux roues directrices du véhicule, distributeur dont un organe d'actionnement est connecté, par l'intermédiaire d'un organe de liaison à un détecteur du couple exercé sur la colonne de direction par l'actionnement du volant du véhicule, ce détecteur comprenant une pièce mobile interposée entre le pignon de direction et la colonne et montée déplaçable en translation dans un alésage dudit pignon et liée en rotation à celui-ci par l'intermédiaire de galets engagés dans des lumières hélicoïdales ménagées dans ledit pignon.

Dans ce dispositif d'assistance connu, l'organe de liaison entre le détecteur de couple et le distributeur hydraulique est formé par une tige basculante dont la partie médiane est reçue à basculement dans un trou du boîtier de direction, tandis que ces extrémités sont insérées d'une part dans une rainure hélicoïdale de la pièce mobile et d'autre part dans une cavité de l'organe d'actionnement du distributeur hydraulique.

Ce montage, outre sa complexité, présente un inconvénient dû à la précision avec laquelle les diverses pièces doivent être réalisées, ce qui augmente considérablement le prix de revient d'un tel dispositif d'assistance. En outre, ce dispositif ne peut être facilement adapté sur des directions qui sont prévues pour être équipées en option d'une assistance, car l'ensemble est logé dans un boîtier dont tous les composants sont indispensables et dont on ne peut séparer les organes d'assistance proprement dits (distributeur hydraulique) sans que cela perturbe le fonctionnement des organes de la direction elle-même. Enfin, la tige basculante doit être fabriquée par usinage ce qui constitue une opération relativement coûteuse.

L'invention a pour but de remédier aux inconvénients de ce dispositif d'assistance de direction antérieur.

Elle a donc pour objet un dispositif du genre défini ci-dessus qui est caractérisé en ce que ledit organe de liaison est formé par un ressort de flexion qui est fixé par l'une de ses extrémités dans le boîtier de direction et par son autre extrémité à l'organe d'actionnement du distributeur hydraulique.

Le ressort d'un tel dispositif d'assistance permet d'absorber de par sa flexibilité toutes les tolérances axiales sur le pignon de direction et sur le tiroir du distributeur hydraulique tandis que sa fixation dans le boîtier de direction peut être très commode. De plus, il peut être réalisé par découpage à plat dans une bande de tôle élastique ce qui est une opération peu onéreuse.

L'invention sera mieux comprise à l'aide de la description qui va suivre, donnée uniquement à titre d'exemple et faite en se référant aux dessins annexés, sur lesquels:

fig. 1 est une vue schématique d'un dispositif hydraulique d'assistance d'une direction à crémaillère;

fig. 2 est une vue en élévation et en coupe d'un boîtier de direction pourvu d'un dispositif d'assistance suivant l'invention;

fig. 2a et 2b sont des schémas montrant respectivement un distributeur à centre ouvert et un distributeur à centre fermé pouvant faire partie du dispositif de la fig. 2;

fig. 3 est une coupe suivant la ligne 3–3 de la fig. 2, et

fig. 4 est une vue partielle d'une coupe suivant la ligne 4–4 de la fig. 1.

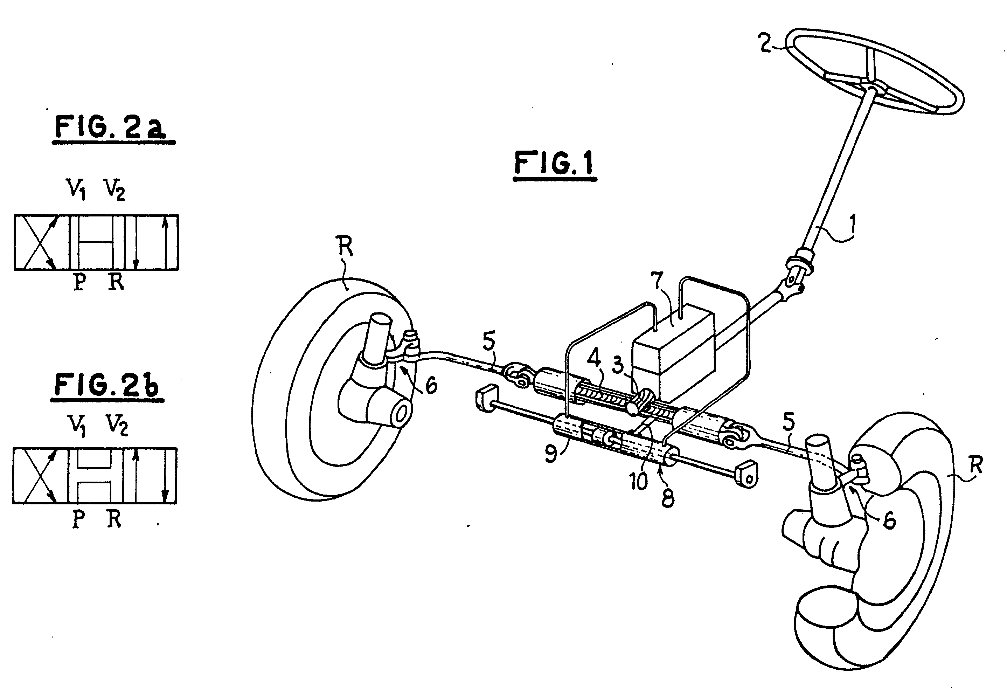

Sur la fig. 1, on a représenté schématiquement une direction assistée pour véhicule automobile. Cette direction comporte principalement une colonne de direction 1 portant un volant 2 à l'une de ses extrémités. A son extrémité oposée, la colonne 1 porte un pignon 3 d'actionnement d'une crémaillère 4 dont les extrémités sont articulées sur des barres 5 de liaison avec les fusées 6 des roues R du véhicule. Entre le pignon 3 et la colonne 1, est interposé un dispositif 7 de détection de couple et de commande hydraulique d'un vérin à double effet 8 dont le cylindre 9 est rendu solidaire en translation de la crémaillère 4 par une liaison mécanique 10. Le vérin à double effet 8 est alimenté en fluide à partir d'une source de fluide sous pression par l'intermédiaire du dispositif de détection et de commande 7.

L'invention vise à créer un dispositif d'assistance de direction qui, du fait de sa conception puisse aisément être associé à un boîtier ordinaire sans nécessiter d'adaptation en vue de son montage.

Un tel agencement est représenté à la fig. 2. Sur cette figure on a représenté un boîtier de direction 11 qui contient et guide de façon habituelle, une crémaillère 12 avec laquelle coopère un pignon de direction 13 disposé perpendiculairement à la crémaillère et qui tourillonne dans le boîtier 11 par l'intermédiaire d'un palier 14 et d'un roulement 15. Le pignon de direction 13 est bloqué longitudinalement par le roulement 15 d'une façon classique, par exemple, au moyen d'un circlips 16 et d'un écrou auto-freiné 17. Le pignon de direction 13 est relié par son extrémité opposée au roulement 15 à une colonne de direction 18 par l'intermédiaire d'un dispositif d'accouplement 19 classique permettant un coulissement axial. Ce dispositif d'accouplement comprend un premier plateau 20 porté par l'extrémité de la colonne de direction 18. A ce premier plateau 20 est relié un second plateau 21 par l'intermédiaire de noix élastiques 22. Le second plateau 21 est fixé au moyen d'un écrou 23 et de rondelles 24 à une pièce mobile 25 engagée par son extrémité opposée à l'écrou 23 dans un alésage borgne 26 du pignon 13. Les rondelles 24 assurent le blocage du plateau 21 sur la pièce mobile 25 grâce à des crantages non représentés, bien connu dans la technique et souvent renforcés par soudure.

Un dispositif d'étanchéité 27 disposé entre la paroi du boîtier 11 et la pièce mobile 25 complète ce montage habituel.

Grâce à l'agencement qui vient d'être décrit, le pignon 13 bloqué par le roulement 15 n'a pas dans sa partie droite de position rigoureuse imposée puisque les noix 22 se raccordent sur des cylindres 28 solidaires du plateau 20 de la colonne de direction 18, ces cylindres étant d'une longueur telle qu'un écart longitudinal de position est toujours absorbé au montage, ce qui permet à son tour d'absorber tous les écarts de positionnement relatifs entre les pièces solidaires d'éléments différents d'une carrosserie affectée d'importantes variations de cotes.

Cette latitude possible de position est exploitée pour le choix des moyens de détection de couple qui vont être décrits maintenant.

L'assistance de direction n'est nécessaire que lorsque le couple à exercer sur le volant devient élevé pour le conducteur, ce qui est généralement le cas lors des manœuvres de garage, lors de déplacements à faible vitesse et lors de manœuvres brutales occasionnées notamment par des évitements d'obstacles.

En revanche, l'assistance de direction n'est pas souhaitable lorsque le couple à exercer sur le volant est faible, ce qui est généralement le cas lors de déplacements à vitesse élevée. De plus, il est alors préférable à vitesse élevée. De plus, il est alors préférable de disposer d'une direction non assistée afin de permettre au conducteur de mieux «sentir la route».

Il s'agit donc pour qu'une assistance de direction soit efficace qu'elle n'intervienne que lorsque cela est utile.

A cet effet, le couple exercé sur la colonne de direction est détecté à chaque instant par un détecteur de couple, destiné à provoquer l'actionnement du dispositif d'assistance à partir d'un certain seuil.

Ce détecteur de couple dont le principe est connu est associé à la pièce mobile 25 coopérant avec le pignon de direction 13. Au niveau du fond de l'alésage borgne 26, le pignon 25 comporte des lumières hélicoïdales 29 dans lesquelles sont engagés des galets 30 portés par un axe transversal 31 engagé dans un perçage ménagé à l'extrémité correspondante de la pièce mobile 25. Ainsi, la pièce mobile 25 et le pignon 13 sont liés en rotation. En revanche, la coopération des galets 30 avec les lumières hélicoïdales 29 permet un déplacement axial de la pièce 25 par rapport au pignon 13.

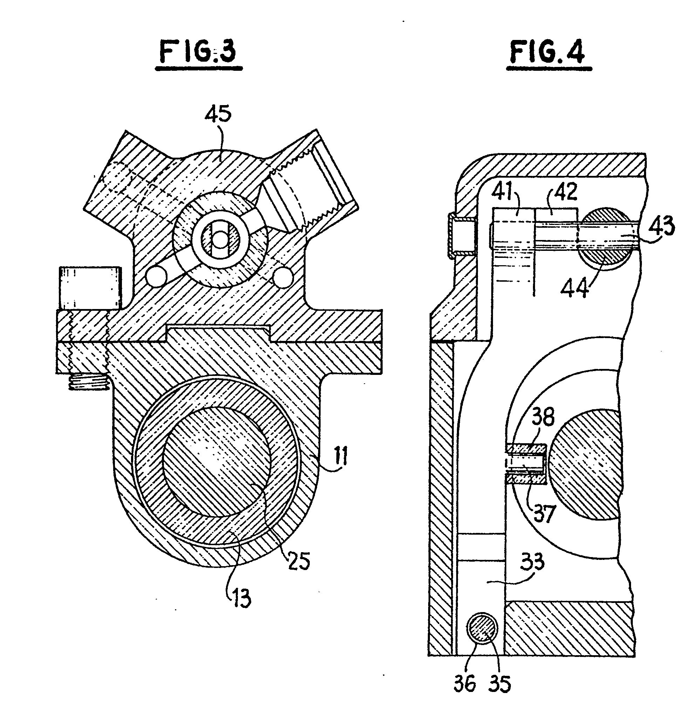

Le détecteur comporte essentiellement un ressort de flexion 32 qui, comme le montre plus clairement la fig. 4, a la forme générale d'un U renversé. Le ressort 32 est fixé par les extrémités de ses branches 33 dans des fentes 34 du boîtier 11 et immobilisé dans ces fentes par des vis 35 qui traversent des trous 36 ménagés dans les branches 33. Chacun des branches 33 du ressort 32 comporte en outre dans sa partie intermédiaire un doigt 37 sur lequel est monté un galet 38. Le ressort 33 est lié longitudinalement à la pièce mobile 25 par engagement des galets 38 de ces deux branches 33 entre deux collerettes 39 prévues sur la pièce 25.

A son extrémité opposée aux branches 33, le ressort 32 comporte un dispositif de liaison constitué par deux fourches 40 réalisées par pliage de languettes 41 et 42 découpées dans son bord supérieur. Dans les fourches est disposée une tige 43 qui traverse l'extrémité d'un organe d'actionnement 44 d'un distributeur hydraulique 45. L'amplitude de déplacement des fourches 40 est amplifiée par le rapport entre la distance des points de fixation des branches 33 du ressort 32 au boîtier 11 et des galets 38 d'une part, et celle de ces galets à la tige 43 d'autre part. Le rapport de distances peut être choisi en fonction du temps de réponse que l'on souhaite obtenir par l'assistance hydraulique, aux sollicitations exercées par le conducteur sur le volant de direction.

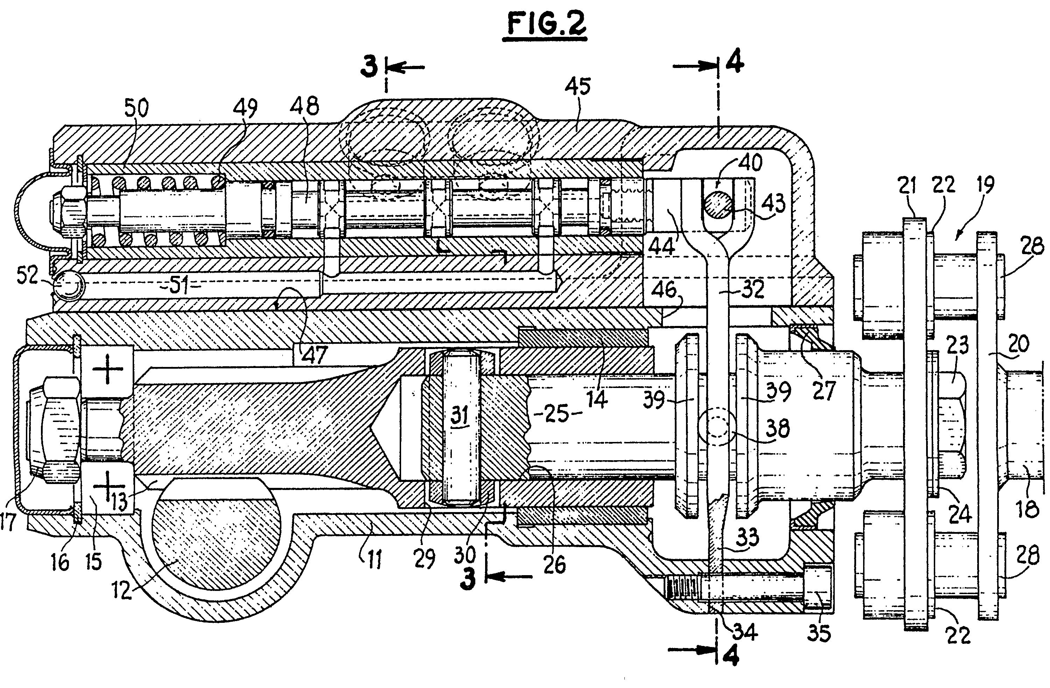

Le ressort de flexion 32 fait saillie par son extrémité supérieure comportant les fourches 40 hors du boîtier de direction 11 en passant par un trou 46 ménagé dans la paroi dudit boîtier. Par ailleurs, la face 47 dudit boîtier de direction dans laquelle est ménagé le trou 46 de passage du ressort 32 est, comme le montre la fig. 3, réalisée de manière à constituer un emplacement pour le montage du distributeur hydraulique 45.

Ce distributeur hydraulique constitue une unité de pilotage dont le boîtier peut être fixé de façon simple sur le boîtier de direction 11 avec interposition éventuelle entre les deux boîtiers d'un joint en un matériau de préférence absorbant destiné à amortir la transmission des vibrations et des bruits hydrauliques.

Le distributeur hydraulique 45 est un distributeur quatre voies trois positions. Il peut être à centre ouvert ou fermé (fig. 2a et 2b). La fig. 2 montre un distributeur à centre fermé comportant un tiroir 48 monté déplaçable à l'encontre d'un ressort 49 dans une chemise 50 montée dans le boîtier du distributeur 45. Le tiroir est alimenté en fluide par un conduit 51 fermé par une bille 52 assurant l'étanchéité du circuit vis à vis des fuites du fluide sous pression. Les déplacements du tiroir 48 sous l'action de l'organe d'actionnement 40 sont destinés à démasquer des orifices de sortie de mise en communication de la source avec une chambre correspondante d'un vérin à double effet d'entraînement de la crémaillère 12 tel que le vérin 8 représenté à la fig. 1. Le ressort 49 tend en permanence à ramener le tiroir 46 dans une position correspondant à la non assistance. Il assure une sécurité dans le cas d'une rupture de la lame de ressort 32.

Le fonctionnement du dispositif représenté aux fig. 2 à 4 est le suivant.

Les couples exercés sur le volant de direction et le sens de ces couples sont traduits par le système constitué par les lumières 29 et les galets 30 en un effort longitudinal dont le sens et la valeur sont liés au couple exercé dans la pièce mobile 25 sur le pignon 13. A cet effort s'opposent les actions conjugées du ressort 32 du détecteur de couple et du ressort antagoniste 49 du distributeur hydraulique 45.

L'inégalité entre les efforts en présence autorise le déplacement du tiroir 48 qui en découvrant plus au moins les orifices de liaison avec le vérin à double effet d'assistance, provoquent l'alimentation en fluide dudit vérin de manière à satisfaire à la loi d'assistance habituelle.

L'agencement qui vient d'être décrit est particulièrement avantageux en ce sens qu'il permet de réaliser des boîtiers de direction de construction identique, qu'ils soient destinés à recevoir un dispositif d'assistance de direction ou non.

L'adjonction d'un dispositif d'assistance de direction consiste alors à fixer sur le boîtier de direction, à l'emplacement prévu à cet effet et matérialisé par la face 47 de celui-ci, un distributeur hydraulique et de lier l'organe d'actionnement de celui-ci à l'extrémité du ressort 32 du détecteur de couple contenu dans le boîtier de direction.

Lorsque le boîtier de direction ne doit pas comporter de dispositif d'assistance de direction associé, il est possible d'omettre le ressort 32 et d'obturer alors par des moyens appropriés, l'ensemble des orifices 34 et 46 destinés à le recevoir ou à lui livrer passage.

**Revendications**

1. Dispositif d'assistance de direction pour véhicule automobile dont la direction comprend un boîtier (11) dans lequel sont montés un pignon de direction (13) lié à la colonne de direction (18) et une crémaillère (12) entraînée par le pignon, un distributeur hydraulique (45) d'actionnement d'un vérin d'entraînement d'un organe lié aux roues directrices du véhicule, distributeur dont un organe d'actionnement (44) est connecté, par l'intermédiaire d'un organe de liaison (32) à un détecteur (25, 29, 30) du couple exercé sur la colonne de direction (18) par l'actionnement du volant du véhicule, ce détecteur comprenant une pièce mobile (25) interposée entre le pignon de direction et la colonne et montée déplaçable en translation dans un alésage (26) dudit pignon et liée en rotation à celui-ci par l'intermédiaire de galets (30) engagés dans les lumières hélicoïdales ménagées dans ledit pignon, caractérisé en ce que ledit organe de liaison est formé par un ressort de flexion (32) qui est fixé par l'une de ces extrémités dans le boîtier de direction (18) et par son autre extrémité à l'organe d'actionnement (44) du distributeur hydraulique (45).

2. Dispositif suivant la revendication 1, caractérisé en ce que ledit ressort (32) présente la forme générale d'un U renversé dont les extrémités des branches (33) sont fixées au boîtier de direction (11) lesdites branches (33) du ressort portant chacune un doigt (37) muni d'un galet (38) disposé entre deux collerettes (39) de la pièce mobile (25).

3. Dispositif suivant l'une quelconque des revendications 1 et 2, caractérisé en ce que ledit distributeur hydraulique (45) est fixé contre le boîtier de direction (18) et en ce que ledit ressort (32) fait saillie de celui-ci dans le boîtier de ce distributeur hydraulique (45) pour être en prise avec ledit organe d'actionnement (44) de celui-ci.

4. Dispositif suivant la revendication 3, caractérisé en ce que l'extrémité dudit ressort (32) faisant saillie hors dudit boîtier de direction (18) comprend au moins une fourche (40) dans laquelle est engagée une tige (43) de liaison avec l'organe d'actionnement (44) du distributeur hydraulique (45).

**Patentansprüche**

1. Lenkhilfe für ein Kraftfahrzeug, dessen Steuerung ein Gehäuse (11) umfasst, in welchem ein mit der Lenksäule (18) verbundenes Steuerritzel (13) und eine durch das Ritzel betätigbare Zahnstange (12) vorgesehen sind, ferner ein hydraulischer Verteiler (45) zur Betätigung eines Zylinders für die Mitnahme eines mit den Lenkrädern des Fahrzeugs verbundenen Elements, wobei ein Betätigungselement (44) des Verteilers über ein Verbindungselement (32) mit einem Detektor (25, 29, 30) zur Erfassung des aufgrund der Betätigung des Lenkrads auf die Lenksäule ausgeübten Drehmoments verbunden ist, wobei dieser Detektor ein bewegliches Stück (25) umfasst, welches zwischen dem Steuerritzel und der Lenksäule angeordnet sowie translatorisch in einer Bohrung (26) des Ritzels verschiebbar und drehbar mit diesem über Rollen (30) verbunden ist, welche in schraubenförmige Durchlässe in dem Ritzel eingreifen, dadurch gekennzeichnet, dass das Verbindungselement als Biegeelement (32) ausgebildet ist, das mit seinem einen Ende an dem Lenkgehäuse (18) und mit seinem anderen Ende an dem Betätigungselement (44) des hydraulischen Verteilers (45) befestigt ist.

2. Vorrichtung nach Anspruch 1, dadurch gekennzeichnet, dass das Biegeelement (32) im wesentlichen die Form eines umgekehrten U aufweist, dessen Armenden (33) am Lenkgehäuse (11) befestigt sind, wobei diese Arme (33) jeweils einen Finger (37) mit einer Rolle (38) zwischen zwei Kragen (39) des beweglichen Stücks (25) aufweisen.

3. Vorrichtung nach einem der Ansprüche 1 und 2, dadurch gekennzeichnet, dass der hydraulische Finger (45) an dem Lenkgehäuse (18) befestigt ist und dass das Biegeelement (32) von diesem in dem Gehäuse des hydraulischen Verteilers (45) hervorsteht, um mit dem Betätigungselement (44) desselben in Eingriff zu stehen.

4. Vorrichtung nach dem Anspruch 3, dadurch gekennzeichnet, dass das Ende des aus dem Lenkgehäuse (18) hervorstehenden Biegeelements (32) mindestens eine Gabel (40) umfasst, in welche eine Stange (43) zur Verbindung mit dem Betätigungselement (44) des hydraulischen Verteilers (45) eingreift.

## Claims

1. A steering assisting device for a motor vehicle whose steering system comprises a housing (11) in which is mounted a steering gear pinion (13) connected to the steering column (18) and a rack (12) driven by the pinion, a hydraulic directional valve (45) for actuating a jack for driving an element connected to the steering road wheels of the vehicle, an actuating element (44) of the directional valve being connected, through a connecting member (32), to a detector (25, 29, 30) of the torque exerted on the steering column (18) by the shifting of the steering wheel of the vehicle, this detector comprising a movable member (25) interposed between the steering pinion and the column and mounted to be movable in translation in a bore (26) of said pinion and connected to rotate with the latter through rollers (30) engaged in helical openings provided in said piston, characterised in that said connecting member is formed by a bendable spring (32) which is fixed by one of its ends in the steering housing (18) and by its other end to the actuating element (44) of the hydraulic directional valve (45).

2. A device according to claim 1, characterised in that said spring (32) has the general shape of an inverted U, the ends of the branches (33) of which are fixed to the steering housing (11), said branches (33) of the spring each carrying a pin (37) provided with a roller (38) disposed between two flanges (39) on the movable member (25).

3. A device according to claim 1 and 2, characterised in that said hydraulic directional valve (45) is fixed against the steering housing (18) and said spring (32) projects from the steering housing (18) into the housing of the hydraulic directional valve (45) so as to engage with said actuating element (44) of the directional valve.

4. A device according to claim 3, characterised in that the end of said spring (32) projecting out of said steering housing (18) comprises at least one fork member (40) in which there is engaged a rod (43) of connection with the actuating element (44) of the hydraulic directional valve (45).

FIG.2a

FIG.1

FIG.2b

# FIG.2

# FIG.3

# FIG.4